# EUROPEAN PATENT APPLICATION

(11) **EP 0 666 443 A1**
(43) Date of publication of application: **09.08.1995**
(21) Application number: 95100833.3
(22) Date of filing: 23.01.1995
(51) Int. Cl.: F16L 3/10

(54) **A device for fixing tubes to a support structure**

(30) Priority: 08.02.1994 IT TO940019 U
(71) Applicant: CO.PRO.TEC. S.r.l., I-15100 Alessandria (IT)
(72) Inventor: Cerafogli, Fernando, I-15040 Pietra Marazzi (IT)
(74) Representative: Marchitelli, Mauro

(57) **Abstract**

A device for fixing tubes to a support structure, particularly for fixing tubes (T) for electrical installations to a wall. The device comprises first and second bodies (2, 4) which can be interconnected by mutual fixing means (14, 20) which enable the two bodies (2, 4) to be fixed together in a plurality of distinct relative positions. The first and second bodies (2, 4) have respective bearing surfaces (26, 28) between which tubes of various diameters can be clamped. The bearing surfaces (26, 28) are shaped in a manner such that the diameter of the tube restrained thereby varies in dependence on the relative positions of the first and second bodies (2, 4).

## Description

The present invention relates to a device for fixing tubes to a support structure, particularly for fixing tubes or electrical installations to a wall.

Metal tubes for electrical installations are generally fixed to the wall or to the ceiling by means of Ω-shaped metal clips which are fixed to the wall at their two ends by means of screws. The central portion of the clip has an arcuate profile with a diameter equal to the diameter of the tube to be fixed.

Known fixing clips have the disadvantage that they can be used only with tubes having dimensions corresponding to those of the fixing clips. Consequently, given that a large number of standard-diameter tubes for electrical installations are available commercially, fitters need to take care to have the entire range of fixing clips available.

In order to overcome the aforesaid disadvantages, the subject of the present invention is a device for fixing tubes to a support structure, characterized in that it comprises first and second bodies which can be interconnected by mutual fixing means which enable the two bodies to be fixed together in a plurality of distinct relative positions, the first and second bodies having respective bearing surfaces between which tubes of various diameters can be clamped, the bearing surfaces being shaped in a manner such that the diameter of the tube restrained thereby varies in dependence on the relative positions of the first and second bodies.

Further characteristics and advantages of the present invention will become clear in the course of the following detailed description, given purely by way of non-limiting example, with reference to the appended drawings, in which:

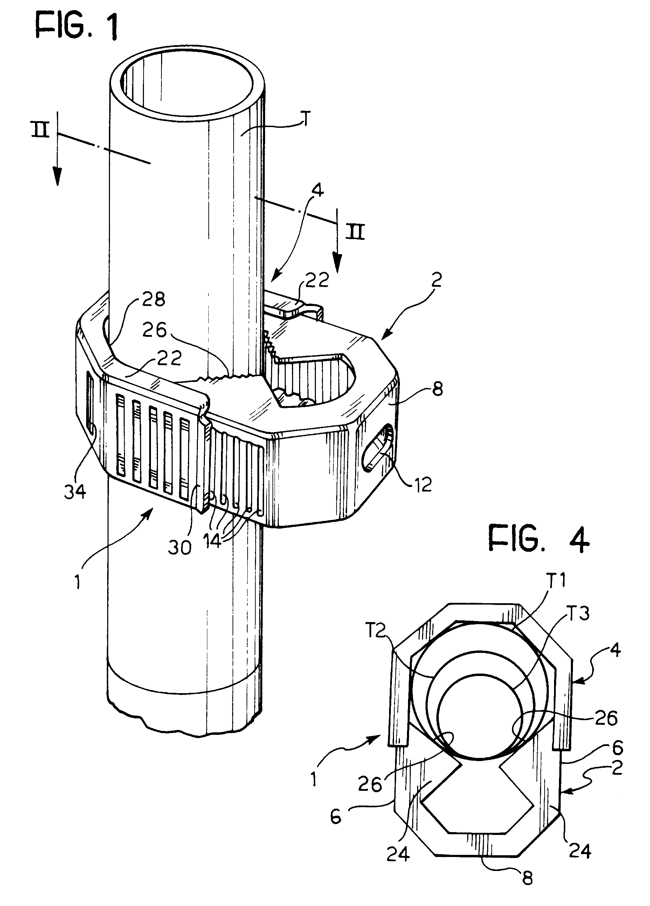

Figure 1 is a perspective view of a device according to the invention fitted on a tube,
Figure 2 is a section taken on the line II-II of Figure 1,
Figure 3 is an exploded perspective view of the device of Figure 1, and
Figure 4 is a schematic plan view showing the ability of the device according to the invention to adapt to tubes with various diameters.

With reference to the drawings, a device for fixing a tube T to a fixed structure such as a wall or a ceiling is indicated 1. The device 1 is constituted essentially by first and second bodies, indicated 2 and 4 respectively, which are made of pressed sheet metal and both of which have generally U-shaped configurations.

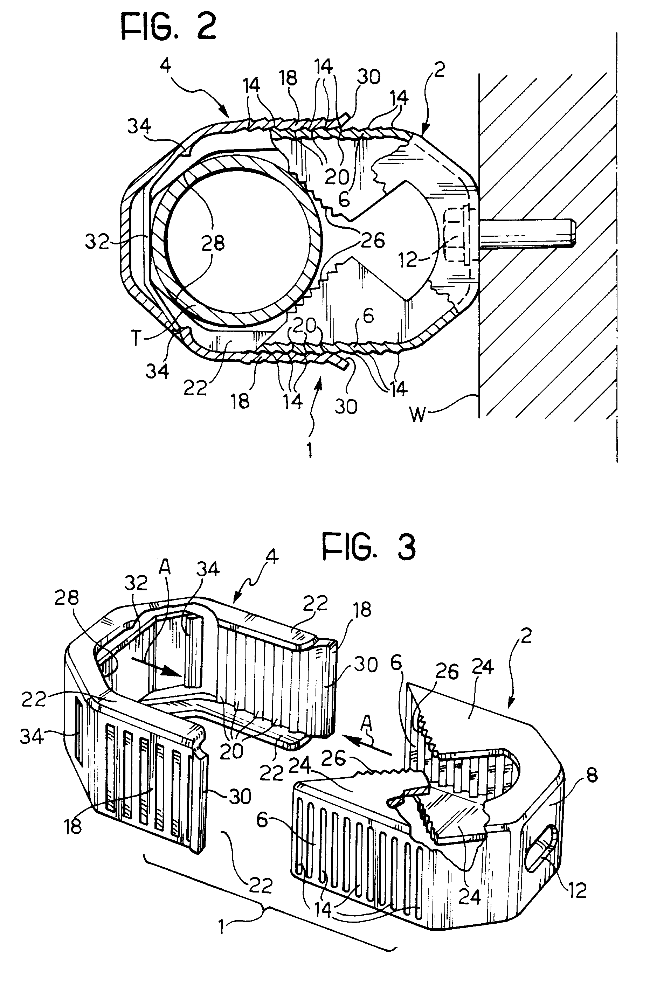

The first body 2 has two parallel arms 6 connected by a base 8 in which there is a slot 10 which serves for the fixing of the body 2 to a wall W by means of a screw 12 (Figure 2). On the outer surface of each of the two arms 6 is a plurality of parallel, equally-spaced teeth 14 constituted by incisions formed by cold plastic deformation.

The second body 4 also has a pair of parallel arms 18, the internal surfaces of which have teeth 20 shaped so as to snap-engage with the teeth 14 of the first body 2. The distance between the inner surfaces of the arms 18 of the second body 4 is substantially equal to the distance between the outer surfaces of the arms 6 of the first body 2. The first and second bodies 2, 4 can therefore be coupled with one another by relative movement in the directions indicated by the arrows A in Figure 3.

The second body 4 has two perimetral flanges 22 which act as guides and lateral restraints for the first body 2.

The first body 2 has, on each arm 6, a pair of flanges 24 which are bent perpendicular to the arms 6 and have inclined bearing surfaces 26 with teeth. The surfaces 26 of the two opposed arms 6 are equally inclined to the directions A in which the mutual coupling takes place between the two bodies 2, 4 and form a seat with a V-shaped profile against which the outer surface of a conduit T bears.

It will be understood from an examination of Figure 4 that the inclined surfaces 26 can house and support conduits of various diameters. In Figure 4, the maximum and minimum measurements of the tubes which can be clamped between the bodies 2, 4 of a device according to the invention are indicated T1 and T3. A generic measurement intermediate the maximum and the minimum is indicated T2.

With reference to Figure 2, in the assembled configuration of the device 1, the tube is clamped between the inclined surfaces 26 of the first body 2 and inclined surfaces 28 of the flange 22 of the second body 4. The device 1 automatically fits the diameter of the tube since the relative movement of the two bodies 2, 4 in the directions A stops in the configuration in which the outer surface of the tube T comes into contact with the surfaces 26, 28. Once this position has been reached, the engagement between the teeth 20 and 14 prevents the bodies 2, 4 from moving apart.

The second body also has a plate spring 32, the ends of which are fitted in slots 34. The spring 32 acts against the external surface of the tube T and makes up for dimensional differences of the tube due to structural tolerances.

A tube is fixed to a wall by firstly fixing the body 2 to the wall by means of the screw 12, then positioning the tube T against the inclined surfaces 26 of the first body 2, and then inserting the second body 4, pushing it until the tube is driven into abutment with the surfaces 26, 28.

The second body 4 can be removed by opening out the two arms 18 so as to release the teeth 20 from their engagement with the teeth 14 and simultaneously extracting the body 4 from the body 2. To facilitate the opening-out of the arms 18, the latter have, at their ends, raised regions 30 in which the tip of a screwdriver can be inserted to act as a lever against the outer surfaces of the arms 6 of the first body 2.

## Claims

1. A device for fixing tubes to a support structure, particularly for fixing tubes for electrical installations to a wall, characterized in that it comprises first and second bodies (2, 4) which can be interconnected by mutual fixing means (14, 20) which enable the two bodies to be connected together in a plurality of distinct relative positions, the first and second bodies (2, 4) having respective bearing surfaces (26, 28) between which tubes (T) of various diameters can be clamped, the bearing surfaces (26, 28) being shaped in a manner such that the diameter of the tube (T) restrained thereby varies in dependence on the relative positions of the first and second bodies (2, 4).

2. A device according to Claim 1, characterized in that the first and second bodies (2, 4) are U-shaped and each has two parallel arms (6, 18) which are coupled with the corresponding arms of the other body by the mutual fixing means (14, 20).

3. A device according to Claim 2, characterized in that the mutual fixing means are constituted by teeth (14, 20) formed in mutually facing surfaces of the arms (6, 18) of the first body (2) and of the second body (4).

4. A device according to Claim 2, characterized in that the first body (2) has, on each of the arms (6), a pair of flanges (24) defining bearing surfaces (26) for the tube (T), the surfaces being inclined to the directions (A) of the relative movement between the first and second bodies (2, 4).
